# EUROPEAN PATENT APPLICATION

(11) **EP 3 838 874 A1**
(43) Date of publication of application: **23.06.2021**
(21) Application number: 19020718.3
(22) Date of filing: 20.12.2019
(51) Int. Cl.: C05D 9/00, C05D 9/02, C05G 3/80, C05G 5/12, C05B 7/00, A01B 79/02, A01C 21/00, A01G 22/22

(54) **PROCESS FOR THE PRODUCTION OF RICE WITH LOW ARSENIC CONTENT**

(71) Applicant: Universidade de Évora, 7000-803 Évora (PT)
(72) Inventor: Alexandre, Carlos Alberto, 7002-554 Évora (PT); Nunes, José Manuel, 7002-554 Évora (PT)
(74) Representative: Gata-Goncalves, Ligia

(57) **Abstract**

The present invention relates to a process for the production of rice with low arsenic content, which can be used for human consumption.

The process of the present invention promotes the reduction of the arsenic content in rice (grain), through the application of zero-valent iron to the soil with a possible complement of foliar fertilizations with phosphorus to the plants.

This process, besides allowing to obtain rice with low arsenic content, has the additional advantage of being able to be applied to conventional rice production systems, under flooding conditions, and in soils with arsenic contents up to about 20 mg As.kg⁻¹.

In this way, the present invention is found in the technical field of agriculture and agri-food products, as well as in the health field, in particular in the production of rice and rice derivatives with beneficial health effects.

## Description

### TECHNICAL FIELD

The present invention relates to a process for the production of rice with low arsenic content, which can be used for human consumption and, in particular, for infant feeding.

The process of the present invention promotes the reduction of the arsenic content in rice (grain), through the application of zero-valent iron, under certain specific conditions, which can be complemented with the application of foliar fertilizations with phosphorus.

This process, besides allowing to obtain rice with low arsenic content, has the additional advantage of being able to be applied to conventional rice production systems, under flooding conditions, and in soils with arsenic contents up to about 20mg As.kg⁻¹.

In this way, the present invention is found in the technical field of agriculture and agri-food products, as well as in the health field, in particular in the production of rice with beneficial health effects.

### BACKGROUND TO THE INVENTION

Arsenic is classified by the International Agency for Research on Cancer (IARC) in Group I as a Carcinogen for humans and is often associated with skin, lung and bladder cancers. Prolonged exposure to arsenic can also cause several non-cancerous diseases, such as skin diseases, hypertension, cardiovascular diseases and diabetes.

Food studies conducted in Europe and the United States show that rice is the primary source of arsenic in a diet without marine foods. The increase in results from the study of the effects of arsenic on public health led the European Commission (2015) to reduce, as of 1 January 2016, the limits of inorganic arsenic, resulting from the sum of As(III) and As(V), permissible in blanched uncooked rice (polished or white) to 0.20 mg kg⁻¹ fresh weight and, in the case of rice intended for infant feeding, to 0.10 mg kg⁻¹ fresh weight.

Rice is mostly produced in flooded soils. In these conditions the soil's redox potential decreases, leading to a reduction in arsenic, as well as other elements with different oxidation states, and its easier absorption by plants.
These contradictory trends - production conditions that facilitate the absorption of arsenic by the rice plant along with the need to reduce the levels of arsenic in rice (grain), make the development of rice production processes with low arsenic content indispensable.

One of the approaches to this is related to the adoption of production techniques, in different stages of the production process, aimed at reducing the absorption of arsenic and the definition of quality categories of the rice produced, with regard to the level of arsenic they present.

In the presence of oxygen, arsenic predominates in its oxidized form (As⁵⁺, As(V) or arsenate), but in flooded soils it tends to change to its reduced form (As³⁺, As(III) or arsenite). In either case, in the soil solution, arsenic occurs in anionic forms resulting from bonds with oxygen. However, while anions of the oxidized form tend to form bonds with iron oxides, which thus contribute to remove part of the arsenic from the solution, the reduced forms remain in solution and therefore more available to be absorbed by rice plants. Thus, it appears that the typical conditions of rice production, by flooding, when promoting reducing conditions in the soil, tend to induce greater arsenic absorption.

Thus, there is a need to develop technologies to obtain rice (grain) with low levels of arsenic, which guarantee compliance with the limits currently in force in the European Union, and with application to the most common rice production systems, which involve the flooding of the soils where their production is located.

The present invention proposes a methodology that results in the reduction of the arsenic content in rice (grain), through the application of zero-valent iron, under certain specific conditions, which can be additionally complemented with application of foliar fertilizations with phosphorus to rice plants.

### DESCRIPTION OF THE INVENTION

The present invention relates to a process for the production of rice with low arsenic content, which can be used for human consumption.

In the context of the present invention, the term "rice" encompasses "grains of rice" whenever it is not explicitly described otherwise.

In particular, the process of the present invention results in the production of rice with maximum inorganic arsenic limits of 0.20 mg kg⁻¹ fresh weight and, in the case of rice intended for infant feeding, of 0.10 mg kg⁻¹ fresh weight of rice, bleached and uncooked, i.e. polished or white rice.

Within the scope of the present invention, the content of inorganic arsenic, present in a given rice sample, is calculated by the sum of As (III) and As(V), admissible in rice.

The process of the present invention promotes the reduction of the arsenic content in rice (grain), through the application of zero-valent iron to the soil and foliar fertilizations with phosphorus to the plants.

Preferably, and according to the process of the present invention, the reduction of the total arsenic level present in rice (grain), is achieved through two combined actions: one directed to the soil (A) and the other to the plant (B).

Action (A), directed at the soil, aims at reducing the level of arsenic dissolved in the soil solution during the crop cycle, through the application of zero-valent iron, under certain specific conditions.

Although the ability of adsorption and/or fixation of arsenic (As) in several products comprising Fe oxides is known, it was surprisingly observed that, when zero-valent iron is applied to the soil with a certain granulometry, of certain classes and specific densities, the As solubility in the soil solution is reduced, which leads to a decrease in the absorption thereof by rice plants.

Thus, the process of the present invention comprises, in a first aspect, the application of zero-valent iron to the soil, with a granulometry of 40%, 45% and 15%, respectively of the classes 1000-250 µm 250-75 µm and <75 µm, in an application density of 5 Mg ha⁻¹ and mixture thereof in the superficial layer of the soil (approximately 0-15 cm) before the flooding phase that precedes sowing.

Action (B), directed to the plant, aims at reducing the root absorption of phosphorus by the roots, mainly during the phase of grain formation, through the application of foliar fertilizations with phosphorus.

In relation to phosphorus, the interactions of arsenic with this macronutrient are also known, with the general principle that the absorption of arsenic, mainly in the form of arsenate, decreases when the phosphorus content in solution increases being especially relevant. However, it is surprisingly observed that application of foliar phosphorus-based fertilizations substantially reduces the root absorption of arsenic present in the soil solution by rice plants.

Thus, the process of the present invention comprises, in a second aspect, the application of foliar fertilizations with phosphorus, namely with diammonium phosphate - DAP, (NH4)₂HPO₄), with 50% P₂O₅, applied in a 0.5% DAP and 2.75 g P₂O₅/100L solution, supplied in 10 weekly applications from the flowering stage.

The application of phosphate foliar fertilization is performed, preferably, in addition to the application of zero-valent iron, as described above.

The process of the present invention, in addition to allowing obtaining rice with a low inorganic arsenic content, in particular with a maximum of this element of 0.20 mg kg⁻¹ fresh weight, more preferably 0.10 mg kg⁻¹ fresh weight of rice, it also has the added advantage of being able to be applied to conventional rice production systems without having to substantially change the materials and methods conventionally used in this type of production.

In addition, the process of the present invention results in a substantial reduction in arsenic levels, within the limits mentioned above, even in soils with high arsenic content, up to about 20 mg As.kg⁻¹.

Thus, the application of zero-valent iron to the soil results in a marked reduction of the arsenic content in the solution of such soil. Tests carried out in pots using soils with a total arsenic content not exceeding 11 mg As kg⁻¹, of which the most stable forms correspond to more than 50% of the total (corresponding to the value obtained by steps 4 and 5 of sequential extraction, carried out according to the method described by Wenzel et al. (2001), with the adaptations suggested by Smith et al. (2008)), reveal that the arsenic content in the soil solution, by the end of the rice growing cycle, always presents values lower than the control embodiments, that is, without the application of zero-valent iron.

In the same type of tests, but in soils to which the arsenic content was artificially doubled, by means of an addition corresponding to 10 mg As kg⁻¹ of soil, in the embodiment with zero-valent iron application to the soil solution, there are constantly arsenic values inferior to 20% of that verified without such application, even at the end of two consecutive crop cycles.

On the other hand, the application of phosphorus in foliar fertilizations contributes to a reduction of the arsenic content in rice. Tests in pots of the complete rice culture cycle (Ariete variety), wherein a solution of diammonium phosphate (0.5% DAP; 2.75 g P₂O₅/100L) was supplied in 10 weekly applications from the flowering stage revealed a lower arsenic content than that of the embodiment without foliar fertilization.

### EXAMPLES

### Example 1. Effect of applying zero-valent iron to the soil

The effect of applying zero-valent iron to the soil on the arsenic content in rice (grain) was evaluated in tests of the complete vegetative cycle of the rice plant, carried out in open-air pots, in accordance with the conventional crop production system, namely under soil flooding conditions.

For these pot tests, two soils were used, both with a total arsenic content not exceeding 11 mg As kg⁻¹, but wherein one soil (S1) is loamy sand and the other (S2) is silty clay. Soil S1 was added with the corresponding 10 mg As kg⁻¹ of soil to simulate situations of soils with arsenic contents up to about 20 mg kg⁻¹ of soil.

The tests carried out involved embodiments C and F for soil S1 and C, A and AF for soil S2, corresponding to: C (control), A (addition of 10 mg As kg⁻¹ of soil in the form of a sodium arsenite solution in the volume necessary to reach soil saturation in each pot), F (addition of zero-valent iron in the ratio of 1 g kg⁻¹ of soil, with a grain size corresponding to 40%, 45% and 15%, respectively, of classes 1000250 µm, 25075 µm and <75 µm, applied directly to the soil and homogenized to a depth of about 30 cm), AF (combination of embodiments A and F, with the application of iron before the arsenic solution).

Three replicates were performed for each embodiment. Rhizon FLEX probes were installed in all pots, buried about 10 cm deep, in order to collect samples of the soil solution and monitor the arsenic content throughout the growing cycle of the crop. At the end of the cycle, all rice (grain) produced was collected and its arsenic content was measured. These tests were repeated in two consecutive years (2018 and 2019) and the applications (embodiments A, F and AF) were performed only in the first year. The rice samples were digested in microwaves and the analytical determinations for arsenic in the soil and rice solution were carried out by Hydride Generator Graphite Furnace Atomic Absorption Spectrometry (HG-GF-AAS).

### Example 2. Effect of applying foliar fertilization with phosphorus

The effect of foliar fertilization with phosphorus on the arsenic content in rice (grain) was evaluated in tests of the complete vegetative cycle of the rice plant, carried out in open-air pots, in accordance with the conventional crop production system, namely under soil flooding conditions.

For these pot tests, loamy sand was used, with a total arsenic content not exceeding 11 mg As kg⁻¹, to which was added the corresponding 10 mg As kg⁻¹ of soil for simulating soils with arsenic content up to about 20 mg kg⁻¹ of soil.

The test carried out involved embodiments C, A and AP corresponding to: C (control), A (addition of 10 mg As kg⁻¹ of soil in the form of a sodium arsenite solution in the volume necessary to reach soil saturation in each pot), AP (embodiment A with foliar fertilization with phosphorus, in the form of diammonium phosphate - DAP, (NH4)2HPO4, with 50% P2O5, applied in a 0.5% DAP solution and 2.75 g P2O5/100L, supplied in 10 weekly applications from the flowering stage). Three replicates were performed for each embodiment. At the end of the cycle, all rice (grain) produced was collected and its arsenic content was measured. The rice samples were digested in microwaves and the analytical determinations for arsenic were carried out by Hydride Generator Graphite Furnace Atomic Absorption Spectrometry (HG-GF-AAS).

### Example 3. Effect of combined application of iron and foliar fertilization

The effect of combined application of iron and foliar fertilization with phosphorus on the arsenic content in rice (grain) was evaluated in tests of the complete vegetative cycle of the rice plant, carried out in open-air pots, in accordance with the conventional crop production system, namely under soil flooding conditions.

For these pot tests, loamy sand was used, with a total arsenic content not exceeding 11 mg As kg⁻¹, to which was added the corresponding 10 mg As kg⁻¹ of soil for simulating soils with arsenic content up to about 20 mg kg⁻¹ of soil.

The test carried out involved the embodiments referred to in Example 2, in addition to the AFP embodiment corresponding to: AFP (conjugation of embodiment A, as described in Example 1 and 2, with embodiment F, as described in Example 1, with embodiment P, as described in Example 2, involving the application of iron before the arsenic solution and phosphorus leaf fertilization only from the flowering stage).

Three replicates were performed for each embodiment. At the end of the cycle, all rice (grain) produced was collected and its arsenic content was measured.

The rice samples were digested in microwaves and the analytical determinations for arsenic were carried out by Hydride Generator Graphite Furnace Atomic Absorption Spectrometry (HG-GF-AAS).

## Claims

1. A process for obtaining rice with a low inorganic arsenic content **characterized in that** a zero-valent iron-based composition is applied to the cultivation soil wherein:
- said zero-valent iron-based composition has a granulometry of 40%, 45% and 15%, respectively of the classes 1000-250 µm 250-75 µm and <75 µm and is applied in a density of 5 Mg ha⁻¹, being mixed with the top layer of the soil, and
wherein
- the inorganic arsenic content present in rice, calculated from the sum of As(III) and As(V), is less than 0.20 mg kg⁻¹ fresh weight of rice, preferably less than 0.10 mg kg⁻¹ fresh weight of rice.

2. A process according to claim 1, **characterized in that** the application of the zero-valent iron composition to the cultivation soil is carried out before the flooding phase that precedes sowing.

3. A process according to claim 1 or 2, **characterized in that** the application of the zero-valent iron composition is carried out by depositing or mixing said composition with the top layer of the soil at a depth ranging from 0 to 15 cm.

4. A process according to any one of claims 1 to 3, **characterized in that** a phosphorus-based fertilization is applied composed of diammonium phosphate (DAP) containing 50% P₂O₅, and is applied in a 0.5% DAP solution and 2.75 g P₂O₅/100L, supplied in weekly applications.

5. A process according to claim 4, **characterized in that** the application of foliar phosphorus-based fertilizations is carried out from the flowering stage of rice plants.

6. A process according to any one of claims 4 or 5, **characterized in that** the application of foliar phosphorus-based fertilizations is carried out in 5 to 15 weekly applications, preferably in 10 weekly applications.

7. A process according to any one of claims 1 to 6, **characterized in that** it is applied to a soil with arsenic contents up to about 20mg As.kg⁻¹.

8. A process according to any one of claims 1 to 6, **characterized in that** it is applied to the production of rice of the Ariete variety.

9. Rice obtained by the process described in any one of claims 1 to 8, **characterized in that** it has an inorganic arsenic content, calculated from the sum of As(III) and As(V), less than 0.20 mg kg⁻¹ in fresh weight of rice, preferably less than 0.10 mg kg⁻¹ fresh weight of rice.
